# EUROPEAN PATENT SPECIFICATION

(11) **EP 0 385 740 B1**
(45) Date of publication and mention of the grant of the patent: **10.04.1996**
(21) Application number: 90302106.1
(22) Date of filing: 28.02.1990
(51) Int. Cl.: G11B 23/03

(54) **Disc cartridge**
Plattenkassette
Cassette à disque

(30) Priority: 28.02.1989 JP 22572/89 U
(43) Date of publication of application: 05.09.1990
(73) Proprietor: SONY CORPORATION, Tokyo (JP)
(72) Inventor: Ishimatsu, Yoshikazu, Shinagawa-ku, Tokyo (JP)
(74) Representative: Ayers, Martyn Lewis Stanley

(56) References cited:
- EP-A- 0 174 651
- EP-A- 0 201 885
- EP-A- 0 202 655
- WO-A-88/09992
- PATENT ABSTRACTS OF JAPAN vol. 8, no. 233 (P-309)(1670) 26 October 1984, & JP-A-59 110076
- PATENT ABSTRACTS OF JAPAN vol. 1, no. 127 (E-57) 21 October 1977, & JP-A- 52 62421

## Description

The present invention relates generally to a disc cartridge by which a disc-shaped record medium such as a magneto-optical disc or the like can be recorded and/or reproduced while being accommodated within the disc cartridge. More particularly, this invention relates to a disc cartridge in which a disc cartridge body can be arranged to have substantially the same mechanical strength over the whole periphery thereof.

As a disc cartridge in which there is accommodated a disc-shaped record medium such as a magneto-optical disc or the like, the following disc cartridge is proposed in the prior art. In this previously-proposed disc cartridge, an opening portion is formed on a flat portion of a cartridge half to expose one portion of a recorded region of a record medium. When the opening portion of the disc cartridge is opposed to a record/reproduce head of a recording and/or reproducing apparatus, the record medium can be recorded and/or reproduced while the record medium is being accommodated within the disc cartridge. In the prior-art disc cartridge, the cartridge body is large and thick in overall arrangement in order to keep a sufficient mechanical strength.

The prior-art disc cartridge is formed thick as described above so that, when this disc cartridge is loaded onto a recording and/or reproducing apparatus, a distance between the thus accommmodated record medium and a recording and/or reproducing system of the recording and/or reproducing apparatus is increased considerably. In particular, when the record medium is the magneto-optical disc, it is generally arranged that an external magnetic field is applied to the magneto-optical disc at the opposite side to the side irradiated by light beams from an optical head. If a coil or permanent magnet provided as external magnetic field generating means for generating the above-described magnetic field and the disc surface are opposed with a large distance therebetween, then it is necessary to supply the external magnetic field generating coil with a very large current, which provides problems such as a large power consumption, a heat generated by the coil and so on. Further, a large-sized permanent magnet utilizing a permanent magnet must be used as the external magnetic field generating means, which needs a large-sized recording and/or reproducing apparatus and a large-sized mechanism for inverting a magnetic field.

In order to solve the aforementioned problems, the following proposal is made. According to such proposal, upper and lower cartridge halves of a cartridge body must be reduced in thickness in order to reduce the distance between the magneto-optical disc, the optical head and the external magnetic field generating means. However, this proposal has unavoidable problems. That is, if the upper and lower cartridge halves are reduced in thickness, then the cartridge body is unavoidably curved and deformed, which fact causes the record medium to be deformed by a stress produced by the deformation of the disc cartridge body. As a result, a protection property of the disc cartridge for protecting the accommodated record medium, which is one of the most specific features of the disc cartridge, is lowered, and a reliability of the disc cartridge is lowered.

Therefore, it is an object of the present invention to provide an improved disc cartridge which can eliminate the aforementioned defects encountered with the prior art.

More specifically, it is an object of the present invention to provide an improved disc cartridge in which a cartridge body can be prevented from being deformed.

It is another object of the present invention to provide an improved disc cartridge in which an optical disc accommodated therein can be positively protected.

It is a further object of the present invention to provide an improved disc cartridge by which an optical disc accommodated therein can always be recorded and/or reproduced under the normal condition.

It is still another object of the present invention to provide a disc cartridge which can be suitably applied to disc cartridges for various sorts of recording and/or reproducing discs.

According to the present invention, there is provided a disc cartridge comprising:
a cartridge body formed of a pair of cartridge halves made of synthetic resin each having an opening extending from its central portion to a side wall portion so as to expose part of a disc-shaped recording medium accommodated therein, and a coupling portion connecting the sides of the opening at an outer side of the body, the surface of each coupling portion being recessed from a surface of the corresponding cartridge half and each coupling portion being of reduced thickness as compared with the thickness of the corresponding cartridge half; characterised by
a reinforcing member formed of a metal plate-shaped member for reinforcing said coupling portion, and being completely enclosed by said coupling portions.

The above, and other objects, features and advantages of the present invention, will be apparent in the following detailed description of preferred embodiments when read in conjunction with the accompanying drawings, in which like reference numerals are used to identify the same or similar parts in the several views.
Fig. 1 is an exploded, perspective view of a disc cartridge according to a first embodiment of the present invention;
Fig. 2 is a diagrammatic view of a section of a main portion of the disc cartridge of Fig. 1, and illustrating the same in the longitudinal direction;
Fig. 3 is a diagrammatic view of a section of a main portion of the disc cartridge of Fig. 1, and illustrating the same in the horizontal direction;
Figs. 4 to 8 are diagrammatic views of sections of main components of other examples of the present invention, respectively; and
Figs. 9A to 9C are perspective views illustrating examples of reinforcing members which are applicable to the disc cartridge of the present invention, respectively.

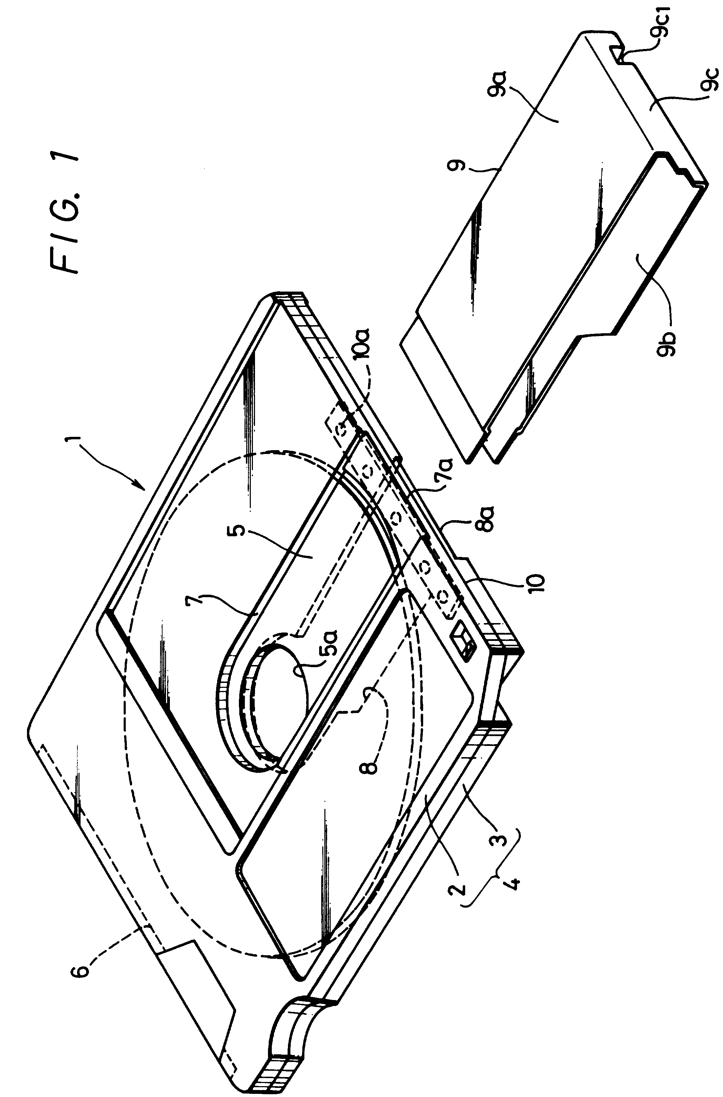

Referring to the drawings in detail, and initially to Figs. 1 to 3, a disc cartridge according to a first embodiment of the present invention will be described hereinunder.

As Fig. 1 shows, there is provided a disc cartridge which is generally denoted by reference numeral 1. In the disc cartridge 1, a cartridge body 4 is comprised of upper and lower cartridge halves 2 and 3, each of which is made of a synthetic resin. Within the cartridge body 4, there is rotatably accommodated an optical disc 5 as a record medium. The optical disc 5 is a magneto-optical disc or the like. The upper and lower cartridge halves 2 and 3 are engaged with each other and fastened together by some suitable means such as a welding-process or the like. In this case, a mouth portion is formed through a rear wall portion of the cartridge body 4. The optical disc 5 is inserted into the cartridge body 4 through the mouth portion and is rotatably accommodated therein. The mouth portion is closed by a lid 6.

Opening portions 7 and 8 formed through the upper and lower cassette halves 2 and 3 each of which opening portions extends from a central portion corresponding to a center aperture 5a of the optical disc 5 to one side wall, i.e., a front wall portion of the cartridge body 4 in such a manner that the peripheral surface portion of the optical disc 5 around its center aperture 5a and one portion covering the peripheral portion to the outer periphery of the optical disc 5 are exposed outside through the opening portions 7 and 8. Under the condition that the disc cartridge 1 is loaded on a recording and/or reproducing apparatus (not shown), a chucking plate provided within the recording and/or reproducing apparatus is inserted into the latter half portion at the center aperture 5a of the disc 5 in the opening portion 7 of the upper cartridge half 2 while a turntable provided within the recording and/or reproducing apparatus is inserted into the opening portion 8 of the lower cartridge half 3. Further, a magnetic field generating coil or bias magnet is located at the first half portion of the opening portion 7 as magnetic field generating means, whereas an optical head (not shown) is located at the first half portion of the opening portion 8.

The disc cartridge body 4 is provided with a slidable shutter 9 to open and/or close the two opening portions 7 and 8. The shutter 9 is made of a metal plate such as a stainless steel or the like or a hard synthetic resin. The shutter 9 is comprised of a pair of upper and lower shutter plate portions 9a, 9b and a front wall plate portion 9c which unitarily connects the two shutter plate portions 9a and 9b at the front side to form a configuration of substantially U-letter. The front wall plate portion 9c is provided with an engaging portion 9_{c1} which engages with an opening and/or closing member (not shown) of the recording and/or reproducing apparatus.

This shutter 9 is inserted into the cartridge body 4 so that it can be freely slid in the lateral direction. When the disc cartridge 1 is loaded on the recording and/or reproducing apparatus, the opening and/or closing member of the recording and/or reproducing apparatus is engaged with the engaging portion 9_{c1}, whereby the slide shutter 9 is slid in the lateral direction to thereby open the opening portions 7 and 8.

In the thus arranged disc cartridge 1, in this embodiment, coupling portions 7a and 8a of the outer end portions of the opening portion 7 and 8 in the upper and lower cartridge halves 2 and 3, that is, the portions of the front wall portions of the upper and lower cartridge halves 2 and 3 opposing the opening portions 7 and 8 are formed thin in thickness so that they respectively become lower than the surfaces of the cartridge halves. A resilient reinforcing member 10 is secured between the thin coupling portions 7a and 8a over the two side portions of the coupling portions 7a and 8a as reinforcing means.

The reinforcing member 10 is formed of a nonferrous metal plate such as a duralumin plate or the like. Through-holes 10a are formed through the reinforcing member 10 at a predetermined spacing. The front wall portions involving the coupling portions 7a and 8a of the upper and lower cartridge halves 2 and 3 are welded via these through-holes 10a by a ultrasonic welding-process, thereby the reinforcing member 10 being secured over the two side portions of the coupling members 7a and 8a.

As described above, the reinforcing member 10 is secured between the thin coupling portions 7a and 8a of the outer end portions of the opening portions 7 and 8 in the upper and lower cartridge halves 2 and 3 over the two side portions of the coupling portions 7a and 8a, whereby the thin coupling portions 7a and 8a are reinforced, thus enabling the cartridge body 4 to have substantially the same mechanical strength in the whole periphery, that is, the front and rear wall portions and the two side wall portions of the cartridge body 4. Therefore, regardless of the existence of the thin coupling portions 7a and 8a, the cartridge body 4 can be prevented from being bent and deformed, thus assuring the positive protection of the optical disc 5 rotatably accommodated therein.

The coupling portions 7a and 8a formed at the outer end portion sides of the opening portions 7 and 8 of the cartridge body 4 are thin and lower than the surfaces of the upper and lower cartridge halves 2 and 3 so that, when the disc cartridge 1 is loaded on the recording and/or reproducing apparatus, the thin coupling portions 7a and 8a can act as a clearance portion into which the recording and/or reproducing head is escaped. In other words, when the optical disc 5 is the magneto-optical disc, the thin coupling portions 7a and 8a can act as the clearance portion into which there are escaped the magnetic field generating coil or the bias magnet provided as the external magnetic field generating means and the optical head, whereby the surface of the magneto-optical disc can be made close to the magnetic field generating coil and the optical head. Thus, the power consumption can be reduced, and the heat generated from the coil can be reduced.

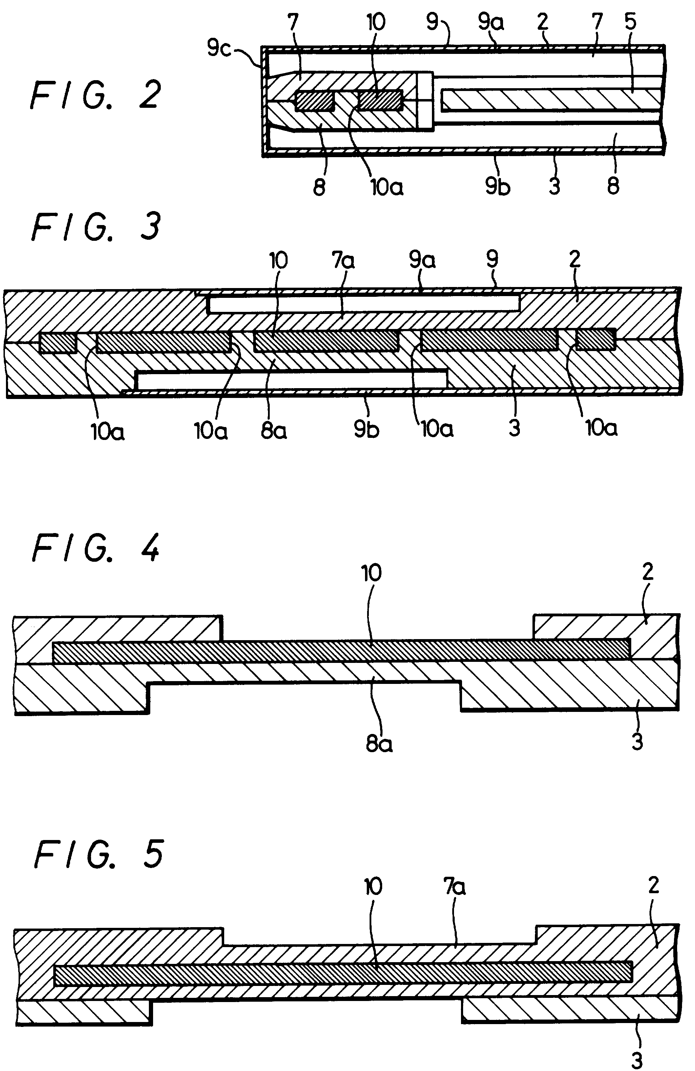

In the arrangement as described above, the reinforcing member 10 may be secured to one of the cartridge halves as shown in other embodiments shown in Figs. 4, 5 and 6.

More specifically, if the reinforcing member 10 is secured, for example, to the inner surface side of the thin coupling portion 8a of the lower cartridge half 3 over the respective side portions of the coupling portion 8a as shown in Fig. 4, then the thin coupling portion of the upper cartridge half 2 can be omitted.

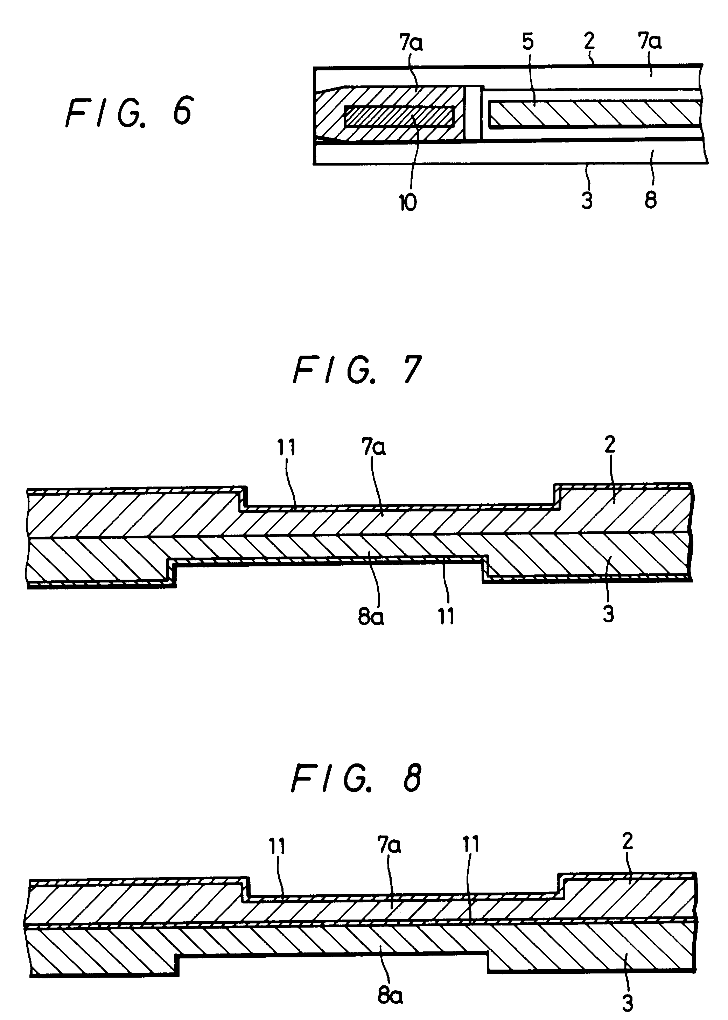

Further, if the front wall portion, for example, of the upper cartridge half 2 is unitarily formed with that of the lower cartridge half 3 and the reinforcing member 10 is secured with the thus unitarily-formed front wall in response to the thin coupling portion 7a formed on the outer surface side in a so-called insert molding method as shown in Figs. 5 and 6, then the lower cartridge half 3 can be formed as the flat surface having no front wall portion.

Furthermore, if the reinforcing member 10 is replaced with a non-ferrous plating layer 11 formed on the surface sides which include the thin coupling portions 7a and 8a of the upper and lower cartridge halves 2 and 3 as shown in Fig. 7, then the non-ferrous plating layer 11 is formed by a chromium plating-process on the copper plate.

If the non-ferrous plating layer 11 is formed on the resin surface, then a tensile strength thereof and a compressive strength thereof can be increased, thereby achieving the same effects as those of the preceding embodiments.

Fig. 8 shows a modified example of the embodiment shown in Fig. 7, wherein the plating layer 11 is formed on one of the upper and lower cartridge halves.

To be more concrete, in the embodiment shown in Fig. 8, the non-ferrous plating layer 11 is formed on the surface side and on the inner surface side involving the thin coupling portion 7a of the upper cartridge half 2, whereas the non-ferrous plating layer 11 is not formed on the lower cartridge half 3 side. Also in this case, if the upper and lower cartridge halves 2 and 3 are unitarily formed, it is possible to achieve the similar effects as those of the embodiment of Fig. 7.

As set forth above, according to the embodiments shown in Figs. 4 to 8, regardless of the existence of the thin coupling portions, the cartridge body 4 can be prevented from being bent and deformed so that the optical disc 5 accommodated therein can be protected positively.

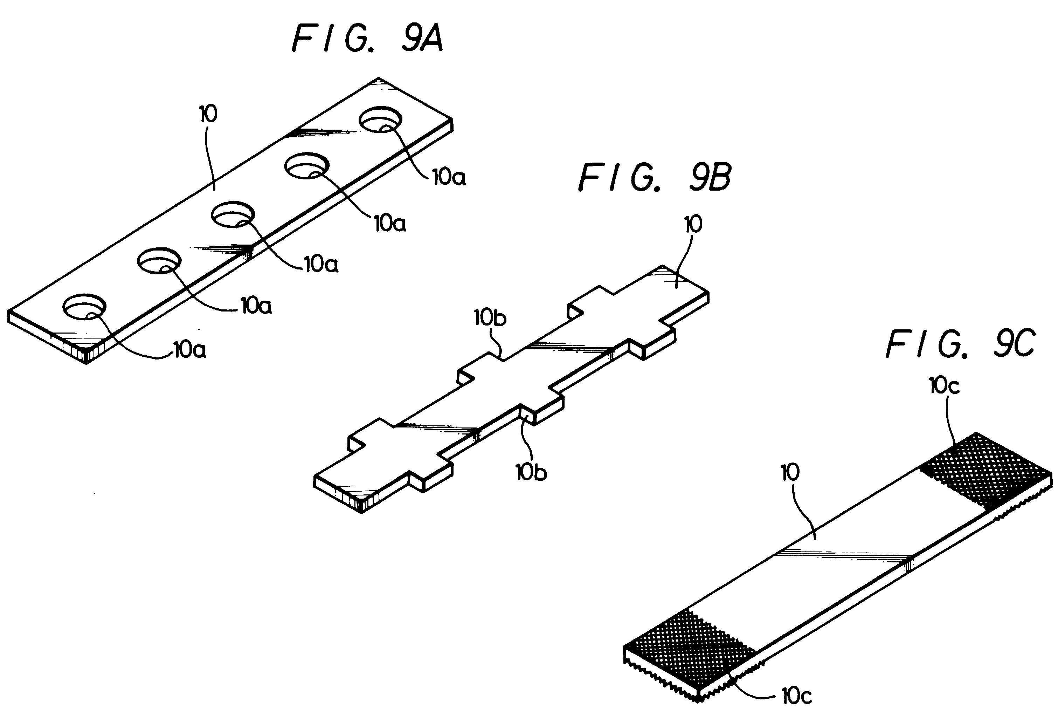

Figs. 9A, 9B and 9C respectively illustrate examples of reinforcing members which are applicable to the present invention; Fig. 9A illustrates the reinforcing member 10 used in the above-described embodiments; Fig. 9B illustrates an example of the reinfocing member 10 in which convex portions 10b are formed on the outer periphery of the reinforcing member 10 which is secured to the cartridge halves in an engaged-fashion, thus restricting the expansion and compression of the cartridge halves; and Fig. 9C illustrates another example of the reinforcing member 10 in which concave and convex surfaces 10c are formed on the front and rear surfaces of at least respective ends of the reinforcing member 10 so as to improve the bonding property thereof to the upper and lower cartridge halves. This reinforcing member 10 of Fig. 9C is suitable in the application to being secured to the cartridge halves in the so-called insert molding method.

While the reinforcing member is used as the reinforcing element as described above, the aforementioned flat reinforcing member may be rod-shaped reinforcing members which are circular, square or the like in cross section. Further, while a material for forming the reinforcing member such as the reinforcing piece or the like is not limited to a non-ferrous material, it is possible to use any material which is firm to a resin material such as a carbon fiber, a glass fiber or the like for the material used for molding the upper and lower cartridge halves.

Furthermore, it is needless to say that the present invention is not limited to the disc cartridge for the magneto-optical disc and that the present invention can be similarly applied to various sorts of disc cartridges for recording and/or reproducing disc.

As described above, according to the present invention, since the reinforcing means is provided on the thin coupling portions formed on the opening portion of the disc cartridge as the portions which act as the escape portions for the recording and/or reproducing head when the disc cartridge is loaded onto the recording and/or reproducing apparatus, the disc cartridge can maintain substantially the same rigidity over the whole periphery thereof so that the record medium accommodated therein can be positively protected. Thus, the record medium can always be recorded and/or reproduced under the normal condition, whereby the reliability of the disc cartridge can be improved more.

Having described preferred embodiments of the invention with reference to the accompanying drawings, it is to be understood that the present invention is not limited to those precise embodiments and that various changes and modifications could be effected by one skilled in the art without departing from the spirit or scope of the invention as defined in the appended claims.

## Claims

1. A disc cartridge (1) comprising:
a cartridge body (4) formed of a pair of cartridge halves (2, 3) made of synthetic resin each having an opening (7, 8) extending from its central portion to a side wall portion so as to expose part of a disc-shaped recording medium (5) accommodated therein, and a coupling portion (7a, 8a) connecting the sides of the opening (7, 8) at an outer side of the body (4), the surface of each coupling portion (7a, 8a) being recessed from a surface of the corresponding cartridge half (4) and each coupling portion being of reduced thickness as compared with the thickness of the corresponding cartridge half; characterised by
a reinforcing member (10) formed of a metal plate-shaped member for reinforcing said coupling portion (7a, 8a), and being completely enclosed by said coupling portions.

2. The disc cartridge of claim 1, wherein said reinforcing means (10) is provided at least at one of said cartridge halves (2, 3).

3. The disc cartridge of claim 1 or 3, wherein said reinforcing means (10) is unitarily moulded within said coupling portion (7a, 8a) by a resin mould-process.

4. The disc cartridge of claim 1, 2 or 3, further comprising a metal plate layer (11) formed on a surface of said coupling portion.

## Patentansprüche

1. Plattenkassette (1), mit:
einem Kassettenkörper (4), der aus zwei Kassettenhälften (2, 3) aus Kunststoff besteht, wobei jede eine Öffnung (7, 8) hat, die sich von ihrer Mitte zu einer Seitenwand so erstreckt, daß ein Teil eines darin untergebrachten plattenförmigen Aufzeichnungsmediums (5) freigelegt wird, und einen Ankopplungsbereich (7a, 8a), der die Seiten der Öffnung (7, 8) mit einer Außenseite des Körpers (4) verbindet, wobei die Oberfläche eines jeden Ankopplungsbereichs (7a, 8a) gegenüber einer Oberfläche der entsprechenden Kassettenhälfte (4) zurückversetzt ist und jeder Ankopplungsbereich eine reduzierte Dicke verglichen mit der Dicke der entsprechenden Kassettenhälfte aufweist,
gekennzeichnet durch
ein Verstärkungselement (10), das durch ein metallisches plattenförmiges Teil gebildet ist, um den Ankopplungsbereich (7a, 8a) zu verstärken, und das vollständig durch die Ankopplungsbereiche umschlossen ist.

2. Plattenkassette nach Anspruch 1, wobei das Verstärkungselement (10) bei zumindest einer der Kassettenhälften (2, 3) vorgesehen ist.

3. Plattenkassette nach Anspruch 1 oder 3, wobei das Verstärkungselement (10) als Einheit im Ankopplungsbereich (7a, 8a) durch ein Kunststoffspritzverfahren eingeformt ist.

4. Plattenkassette nach Anspruch 1, 2 oder 3, die weiter eine Metallüberzugsschicht (11) aufweist, die auf einer Oberfläche des Ankopplungsbereichs gebildet ist.

## Revendications

1. Cassette (1) de disque, comprenant :
un corps (4) de cassette formé d'une paire de moitiés (2, 3) de cassette constituées d'une résine de synthèse ayant chacune une ouverture (7, 8) partant de sa partie centrale vers une partie de paroi latérale afin qu'une partie du support d'enregistrement (5) en forme de disque, logé à l'intérieur, soit exposée, et une partie d'accouplement (7a, 8a) raccordant les côtés de l'ouverture (7, 8) à un côté externe du corps (4), la surface de chaque partie d'accouplement (7a, 8a) étant en creux par rapport à une surface de la moitié correspondante (4) de cassette, et chaque partie d'accouplement ayant une épaisseur réduite par rapport à l'épaisseur de la moitié correspondante de cassette, caractérisée par
un organe de renforcement (10) formé d'un organe sous forme d'une plaque métallique destinée à renforcer la partie d'accouplement (7a, 8a) et totalement enfermé par les parties d'accouplement.

2. Cassette de disque selon la revendication 1, dans laquelle le dispositif de renforcement (10) est formé sur l'une au moins des moitiés de cassette (2, 3).

3. Cassette de disque selon la revendication 1 ou 3, dans laquelle le dispositif de renforcement (10) est moulé en une seule pièce dans la partie d'accouplement (7a, 8a) par une opération de moulage de résine.

4. Cassette de disque selon la revendication 1, 2 ou 3, comprenant en outre une couche (11) formée d'une plaque métallique réalisée sur une surface de la partie d'accouplement.
